## Europäisches Patentamt
## European Patent Office
## Office européen des brevets

(11) Veröffentlichungsnummer: **0 177 010**
A2

(12) **EUROPÄISCHE PATENTANMELDUNG**

(21) Anmeldenummer: 85112389.3

(22) Anmeldetag: 01.10.85

(51) Int. Cl.⁴: **C 08 L 77/02**
C 08 L 67/02, C 08 G 69/18
C 08 G 69/36, C 08 L 77/00
C 08 J 9/12, C 08 G 81/00

(30) Priorität: 04.10.84 DE 3436359

(43) Veröffentlichungstag der Anmeldung:
09.04.86 Patentblatt 86/15

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Horn, Peter, Dr.
Neue Stuecker 15
D-6900 Heidelberg(DE)

(72) Erfinder: Baumann, Edwin
Laurentiusstrasse 11
D-6707 Schifferstadt(DE)

(72) Erfinder: Marx, Matthias, Dr.
Seebacher Strasse 49
D-6702 Bad Duerkheim(DE)

(54) Polyamidformteile und Verfahren zu ihrer Herstellung.

(57) Polyamidformteile, die gegebenenfalls zellförmig sind, mit verbesserten Gebrauchseigenschaften, hergestellt durch aktivierte alkalische Polymerisation von Caprolactam, werden erhalten durch Mitverwendung von amorphen oder teilkristallinen Polykondensaten, die eine Löslichkeit in Caprolactam bei 120°C von mindestens 5 Gew.-% aufweisen.

EP 0 177 010 A2

Croydon Printing Company Ltd.

## Polyamidformteile und Verfahren zu ihrer Herstellung

Gegenstand der Erfindung sind gegebenenfalls zellförmige Polyamidformteile, hergestellt durch aktivierte anionische Lactampolymerisation, mit verbesserten Gebrauchseigenschaften, d.h. mit hohem Elastizitätsmodul, hoher Schlagzähigkeit, guter Kälteschlagzähigkeit, hoher Wärmeformbeständigkeit, hoher Lichtstabilität, geringer Wasseraufnahme, mit einer formgetreuen Oberfläche und weitestgehend schrumpffrei.

Polyamide, hergestellt durch aktivierte alkalische Lactampolymerisation, sind seit mehr als 30 Jahren bekannt und haben bisher noch keine große Bedeutung erlangt. Insbesondere ist es bisher noch nicht gelungen, großflächige Teile mit guten Gebrauchseigenschaften herzustellen. Die Formteile zeigen sehr starken Schrumpf bei der Herstellung, die (Kälte)--Schlagzähigkeit ist ungenügend, hohe Wasseraufnahme führt zu einem starken Abfall des Elastizitätsmoduls, die Wärmeformbeständigkeit und die Lichtstabilität sind unbefriedigend und die Oberfläche weist Fehlstellen und Schrumpfstellen auf.

Es hat nicht an Versuchen gefehlt, diese Nachteile zu beseitigen. So beschreibt die DE-A 24 12 106 den Zusatz von bestimmten Blockpolymerisaten zur Erhöhung der Kälteschlagzähigkeit. Dabei wird jedoch gleichzeitig der Elastizitätsmodul erniedrigt; auch zeigen die Formteile starken Schrumpf bei der Herstellung. Die in der DE-A-32 25 137 beschriebenen Zusatzstoffe vermindern zwar den Volumenschrumpf drastisch, sie verschlechtern jedoch das mechanische Niveau hinsichtlich Steifigkeit und Schlagzähigkeit. Es wurde nun überraschenderweise gefunden, daß der Zusatz von bestimmten, in Caprolactam löslichen Polykondensaten die geschilderten Nachteile des Stands der Technik überwindet. Es wurde weiterhin gefunden, daß mit dem erfindungsgemäßen Verfahren Teile ohne äußeres und inneres Trennmittel hergestellt werden können bei extrem kurzen Cykluszeiten.

Gegenstand der Erfindung sind somit gegebenenfalls zellförmige Polyamidformteile, enthaltend

A)    70 - 99 Gew.-Teile Polycaprolactam und

B)    1 - 30 Gew.-Teile eines Polykondensats, das amorph ist oder weniger als 30 % kristalline Anteile aufweist, mit einer Löslichkeit in Caprolactam bei 120°C von mindestens 5 Gew.-%,

C)    sowie gegebenenfalls bis zu 100 Gew.-Teile Glasfasern und/oder andere Füllstoffe und/oder flächige Verstärkungsmaterialien und/oder

D)    Übliche Hilfsstoffe in wirksamen Mengen.

Gegenstand der Erfindung ist ferner ein Verfahren zur Herstellung dieser Polyamidformteile, das dadurch gekennzeichnet ist, daß man eine Lösung des Polykondensats (B) in flüssigem Caprolactam gegebenenfalls in Gegenwart der Füllstoffe (C) und/oder Üblichen Hilfsmitteln, in an sich bekannter Weise in einer Form aktiviert alkalisch polymerisiert.

Erfindungswesentlich ist es, bei der an sich bekannten und Üblichen Herstellung von Polyamidformkörpern durch aktivierte alkalische Lactampolymerisation Polykondensate (B) mitzuverwenden, wobei man diese in einer Menge von 1 - 30 Teilen, bezogen auf 70 - 99 Teile Caprolactam (A), einsetzt. Die Summe aus A+B = 100 Teile. Die Polykondensate sind entweder amorph oder teilkristallin, wobei der kristalline Anteil 30 % nicht Überschreiten soll. Die Polykondensate müssen in flüssigem Caprolactam löslich sein. Die Löslichkeit bei der Verarbeitungstemperatur soll so groß sein, daß die eingesetzte Menge vollständig gelöst vorliegt, d.h. die Löslichkeit in Caprolactam bei 120°C muß mindestens 5 Gew.-% betragen. Polykondensate, die diese Bedingung erfüllen, sind beispielsweise Polyamide, insbesondere solche mit einem K-Wert (0,5%ig in Phenol/o-Dichlorbenzol 1:1) von 30 bis 75, und zwar aliphatische Polyamide mit einem Schmelzpunkt unter 200°C oder aromatisch/aliphatische Polyamide mit einem Glaspunkt etwa zwischen 100 und 170°C. Gut geeignet sind Polyamide aus 20 - 60 Gew.-% eines cyclischen Lactams mit 6 bis 12 C-Atomen und/oder $\omega$-Aminocarbonsäuren mit 6 bis 20 C-Atomen und 40 - 80 Gew.-% Salzen von aliphatischen cycloaliphatischen oder aromatischen Dicarbonsäuren mit 6 bis 14 Kohlenstoffatomen und/oder dimerisierten Fettsäuren mit etwa 36 C-Atomen mit aliphatischen, cycloaliphatischen, araliphatischen Diaminen mit 4 - 20 C-Atomen und/oder Polyetherdiaminen mit Molekulargewichten von 500 bis 5000.

Beispiele dafür sind Polyamide, aufgebaut aus 20 - 60 Gew.-% Caprolactam, Capryllactam, Laurinlactam, Önanthlactam und $\alpha$-Methylcaprolactam und/oder $\omega$-Aminocapronsäure, $\omega$-Aminoundecansäure und 40 - 80 Gew.-% Salzen der Bernsteinsäure, Glutarsäure, Adipinsäure, Sebazinsäure, Decandicarbonsäure, dimerisierter Fettsäuren, die als technische Produkte auch bis zu 25 Gew.-% trimerisierte Fettsäuren enthalten können, Cyclohexandicarbonsäure, Terephthalsäure, Isophthalsäure und/oder Naphthalindicarbonsäure mit Tetramethylendiamin, Pentamethylendiamin, Hexamethylendiamin, Octamethylendiamin, Nonamethylendiamin, Decamethylendiamin, Isophorondiamin, Piperazin, 2,2,4- bzw. 2,4,4-Trimethylhexamethylendiamin, 4,4'-Diaminodicyclohexylmethan, 3,3'-Dimethyl-4,4'-diaminodicyclohexylmethan,
2,2-Bis-(4-aminocyclohexyl-)propan, 1,4-(aminomethyl)-cyclohexan,
4,9-Dioxadodecan-1,2-diamin, m-Xylylendiamin, p-Xylylendiamin, Aminoethylpiperazin, Diethylentriamin, Bishexamethylentriamin und/oder Polyetherdiamin der Formel $H_2N-(CH_2-CHR-O)_n-CH_2-CHR-NH_2$, wobei R Wasserstoff
oder Methyl bedeutet mit Molekulargewichten von 500 bis 5000.

Geeignete Polykondensate sind beispielsweise auch Polyamide aus mindestens einer aliphatischen Dicarbonsäure mit 4 - 12 C-Atomen und/oder
aromatischen Dicarbonsäure mit 8 bis 12 C-Atomen und mindestens einem
aliphatischen oder cycloaliphatischen oder araliphatischen Diamin mit 4
bis 20 C-Atomen und/oder Polyetherdiamin mit Molekulargewichten von 500
bis 5000. Beispiele dafür sind Polyamide aus Bernsteinsäure, Glutarsäure,
Adipinsäure, Korksäure, Sebazinsäure, Decandicarbonsäure Terephthalsäure
und/oder Isophthalsäure und Tetramethylendiamin, Pentamethylendiamin,
Hexamethylendiamin, Octamethylendiamin, Decamethylendiamin, 2,2,4- bzw.
2,4,4-Trimethylhexamethylendiamin, 4,4'-Diaminodicyclohexylmethan,
3,3'-Dimethyl-4,4'-diamino-dicyclohexylmethan, 2,2-Bis-(4-aminocyclohexyl)propan, 1,4-Di(aminomethyl)cyclohexan, 4,9-Dioxadodecan-1,12-diamin
m-Xylylendiamin, p-Xylylendiamin, Diethylentriamin, Bishexamethylentriamin, Isophorondiamin, Piperazin, 1-(2-Aminoethyl)-piperazin, 4'-(2-Aminoethyl-)piperidin.

Besonders vorteilhaft sind Polyamide aus 25 - 40 Gew.-% Caprolactam und
60 - 75 Gew.-% eines äquimolaren Gemisches aus dimerisierten Fettsäuren
(z.B. technische Produkte mit Säurezahlen von 188 - 198), gegebenenfalls
im Gemisch mit anderen aliphatischen Dicarbonsäuren, wie Adipinsäure, und
aliphatischen Diaminen, insbesondere Hexamethylendiamin.

Geeignete Polykondensate sind weiterhin (Co)polyester aus mindestens
einer aromatischen Dicarbonsäure mit 8 bis 20 C-Atomen und mindestens
einem aliphatischen Diol mit 2 bis 12 C-Atomen und/oder Polyetherdiol mit
einem Molekulargewicht von 200 bis 5000. Beispiele dafür sind Polyester
aus Phthalsäure, Isophthalsäure und/oder Terephthalsäure und Ethylenglykol, Propylenglykol, 1,4-Butandiol, 1,6-Hexandiol, Polyethylenglykol,
Polypropylenglykol, Polytetrahydrofuran.

Im Formteil liegen die Polykondensate in freier Form vor, sie können aber
auch ganz oder teilweise mit dem Polycaprolactam chemisch verknüpft sein,
beispielsweise über Harnstoff-, Urethan- und/oder Amidgruppen. Eine
solche Verknüpfung erfolgt in der Regel dann, wenn das Polykondensat
Endgruppen aufweist, die eine Aktivatorfunktion für die anionische Lactam- polymerisation besitzen oder auch wenn Polykondensatendgruppen sich mit dem verwendeten Aktivator umsetzen. Beispielsweise treten Molekülverknüpfungen von Polyamiden mit dem Polycaprolactam auf, wenn die Endgruppen des Polyamids mit Lactamsäureester, Acryloylcaprolactam oder einem Diisocyanat umgesetzt werden. Als Diisocyanat verwendet man vorteilhaft technisches Toluylendiisocyanat oder 4,4'-Diphenylmethandiisocyanat.

Die verwendeten Polykondensate sind bekannte Stoffe. Ihre Herstellung erfolgt üblicherweise durch Schmelzkondensation. Man kann zusätzlich die Lagerstabilität der Lösungen der Polykondensate in flüssigem Caprolactam erhöhen, das mechanische Niveau der Fertigteile verbessern sowie die Cycluszeit verkürzen, indem man die funktionellen Endgruppen der Polykondensate in an sich bekannter Weise maskiert, beispielsweise dadurch, daß die freien Carboxylgruppen verestert werden, die freien Aminogruppen acyliert werden und die freien Hydroxylgruppen verestert werden. So kann man durch Umsetzung mit primären Alkoholen oder mit Orthoameisensäureester Dimethylformamidacetale oder Glyoxylsäurenitrilacetalen die Carboxylgruppen maskieren, durch Umsetzung mit Isocyanaten, Acryloylcaprolactam oder Methacryloylcaprolactam oder Lactamsäureestern oder anderen üblichen Acylierungsmitteln die freien Aminogruppen maskieren und durch Umsetzung mit Acetylchlorid, Benzoylchlorid oder Acetanhydrid die Hydroxylgruppen maskieren. Es ist möglich, die Maskierung der Endgruppen der Polykondensate in Caprolactam als Lösungsmittel durchzuführen und die dabei entstehenden Nebenprodukte destillativ zu entfernen. Dimethylformamidacetale eignen sich zur Maskierung sowohl der Amino- wie der Carboxylgruppen, das selbe gilt für Lactam-N-carbonsäurealkylester. Durch die Maskierung kann erreicht werden, daß das Polykondensat chemisch an die Polycaprolactammatrix gebunden ist. Wesentlicher Bestandteil der neuen Formteile ist Polycaprolactam. Das Polymere ist bedingt durch das aktiviert alkalische Polymerisationsverfahren, relativ hochmolekular und weist im allgemeinen eine relative Viskosität auf zwischen 2,0 und 50, insbesondere 7,5 bis 22, gemessen als 1%ige Lösung.

Bevorzugt wird ein Homopolymerisat des Caprolactams verwendet, doch sind in gleicher Weise auch Copolymerisate des Caprolactams geeignet, die beispielsweise bis zu 15 Mol.-% andere Lactame, wie Capryllactam, Laurinlactam, Önanthlactam oder andere copolymerisierbare Monomere einpolymerisiert enthalten, oder die mit Polyetherpolyolen, präpolymeren Isocyanaten oder Bisacyllactamen modifiziert sind.

Die Formteile können gegebenenfalls bis zu 100 Gew.-Teile, bezogen auf 100 Gew.-Teile A und B, an üblichen, verstärkenden oder nicht verstärkenden Füllstoffen enthalten, wie Glasfasern, Kohlenstoff-Fasern, Fasern aus aromatischen Polyamiden. Nicht nur Kurzfasern der Länge zwischen 0,1 und 3 mm, sondern auch längere Fasern, selbst Endlosfasern, Fasermatten, -gewebe, -vliese, -rovings und -bündel können enthalten sein. Weitere geeignete Füllstoffe sind feinverteilte Silikate, wie Wollastonnit, Talkum, Kreide, Molybdänsulfid und Ruß.

Die Formteile können weiterhin gegebenenfalls übliche Hilfsstoffe in wirksamen Mengen enthalten, wie Katalysatoren, Aktivatoren, Regler, Pigmente, Farbstoffe, Weichmacher und Flammschutzmittel.

Die neuen Polyamidformteile können gegebenenfalls 3 bis 100 Vol.-%, bezogen auf (A) und (B), gasgefüllte Zellen mit einem mittleren Durchmesser von weniger als 0,2 mm enthalten. Dabei ist die Außenhaut weitestgehend zellfrei etwa im Bereich zwischen 1 und 100 µm.

Durch das Einmischen eines Gases in feinster Verteilung kann ein feinzelliger Caprolactam-Schaum hergestellt werden, der bei der Polymerisation zu einem feinzelligen Formteil führt. Überraschenderweise schrumpft dabei das Formteil nicht bzw. nur unwesentlich, denn die Volumenkontraktion beim Übergang Caprolactam zu Polycaprolactam wird durch eine entsprechende Vergrößerung der Zellen des Schaumes kompensiert.

Formteile mit bis 30 Vol.-% Zellen weisen besonders hohe mechanische Festigkeit auf. Vorteilhaft liegt der mittlere Durchmesser der Zellen zwischen 0,001 bis 0,15 mm, insbesondere 0,01 bis 0,1 mm.

Mit Ausnahme der zellfreien Haut liegen die Zellen im Formteil im allgemeinen weitgehend gleichmäßig verteilt vor, doch ist es auch möglich, Formteile herzustellen, die mehrere Zonen mit unterschiedlicher Dichte aufweisen, bei denen also der Volumenanteil an Gaszellen sich kontinuierlich oder diskontinuierlich ändert.

Die Zellen können beliebige gegenüber Caprolactam inerte Gase enthalten, wie Helium, Argon, Ethan, Propen, Difluordichlormethan, Tetrafluormethan, Hexamethyldisilan u.ä.. Vorzugsweise wird Stickstoff verwendet.

Die Herstellung der neuen Formteile kann nach dem bekannten Verfahren der aktivierten anionischen Lactampolymerisation erfolgen, wie es beispielsweise im Kunststoff-Handbuch Bd. VI, Polyamide, Carl Hanser Verlag, 1966, Seite 46 bis 59 beschrieben ist.

Dabei geht man von zwei Komponenten aus, wobei die eine Komponente eine Katalysator enthaltende Lactam-Schmelze und die andere Komponente eine Aktivator enthaltende Lactam-Schmelze ist. Die beiden Komponenten werden gemischt, in eine Form transportiert und dort polymerisiert.

Geeignete Katalysatoren sind z.B. Alkali- und Erdalkaliverbindungen von Lactamen, wie Natrium- $\varepsilon$-caprolactamat, oder von kurzkettigen aliphatischen Carbonsäuren, wie Natrium- oder Kaliumformiat, oder von Alkoholen mit 1 bis 6 Kohlenstoffatomen, wie Natriummethylat oder Kalium-tert.--butylat. Außerdem können auch Alkali- oder Erdalkalihydride, -hydroxide oder -carbonate verwendet werden sowie Grignard-Verbindungen. Gut geeignet ist auch ein Gemisch aus Natrium- $\varepsilon$-caprolactamat und Aluminium- $\varepsilon$--caprolactamat, z.B. im Gewichtsverhältnis 2:1 bis 1:2. Die Katalysatoren werden üblicherweise in Mengen von 0,1 bis 10 Mol.-%, bezogen auf Gesamt-Lactam, eingesetzt.

Als Aktivatoren kommen in Frage: N-Acyllactame, wie N-Acetylcaprolactam, Bisacyllactame, substituierte Triazine, Carbodiimide, Ketene, Cyanamide, Mono- und Polyisocyanate sowie maskierte Isocyanatverbindungen. Sie werden bevorzugt in Mengen von 0,1 bis 10 Mol.-%, bezogen auf Gesamt-Lactam, eingesetzt.

Um teilvernetzte schrumpfarme Produkte zu erhalten, wird zweckmäßig ein tri- oder mehrfunktioneller Aktivator mitverwendet, und zwar in einer Menge von beispielsweise 5 - 20 Mol.-%, bezogen auf den Gesamt-Aktivator. Geeignete Vernetzer sind z.B. Triisocyanate, wie sie durch Trimerisierung von aliphatischen Diisocyanaten erhältlich sind.

Für das Verfahren zur Herstellung von Formteilen mit feinen Gaszellen ist es wesentlich, daß für die aktivierte anionische Polymerisation das Caprolactam in innigem Gemisch mit einem gegenüber Caprolactam inerten Gas vorliegt, dessen Zellen einen mittleren Durchmesser von weniger als 0,2 mm aufweisen. Die benötigte Gasmenge ist in erster Linie davon abhängig, wieviel Vol.-% Gaszellen das Formteil aufweisen soll und läßt sich im Einzelfall leicht durch einen Vorversuch ermitteln.

Das Einbringen des Gases erfolgt durch intensives Vermischen des Gases mit dem flüssigen Caprolactam, vorteilhaft bei einem Druck von 1,5 bis 30 bar. In der Praxis ist ein Vermischen mit der den Katalysator enthaltenden Schmelze oder mit der den Aktivator enthaltenden Schmelze oder mit beiden Schmelzen möglich.

BASF Aktiengesellschaft — 7 — O.Z. 0050/37387

0177010

Wie beim Übergang von Sahne in Schlagsahne verändert sich beim Übergang von Caprolactam zum Caprolactam-Schaum die scheinbare Viskosität im allgemeinen um den Faktor 1,1 bis 10. Dadurch wird bewirkt, daß beim Füllen der Form weniger Turbulenzen auftreten. Der vielfach üblicherweise auftretende Einschluß von großen Luftblasen in das Formteil wird dadurch minimiert.

Zur Erzeugung des Caprolactam-Gas-Schaumes kann man z.B. so vorgehen, daß man das flüssige Caprolactam unter Druck mit dem Gas sättigt und anschließend entspannt. Um bei dieser Methode allein durch Entspannen zu dem gewünschten feinzelligen Schaum zu gelangen, ist es zweckmäßig, ein Emulgiermittel mitzuverwenden. Die Emulgiermittel müssen in der Caprolactamschmelze löslich sein und dürfen keine Gruppen aufweisen, die die Caprolactampolymerisation negativ beeinflussen. Geeignet sind als Emulgiermittel beispielsweise die für Polyurethanschaumstoffe verwendeten handelsüblichen Silikone, wie Polysiloxan-Polyether-Copolymere, ferner übliche Polyether auf Basis Ethylenoxid und/oder Propylenoxid sowie lösliche Polymerisate, die Polyethergruppen aufgepfropft enthalten. Derartige Emulgiermittel sind auch geeignet, die Mischdauer und -intensität von Caprolactam mit dem Gas zur Erzielung der gewünschten Schaumstruktur zu reduzieren. Man benutzt das Emulgiermittel im allgemeinen in einer Menge von 0,01 bis 5 Gew.-%, vorzugsweise 1 bis 3 Gew.-%, bezogen auf Caprolactam.

Bevorzugt werden Emulgiermittel, die mehr als 15, insbesondere 20 bis 50 Gew.-% Polyethergruppen mit OH-, O-Alkyl- oder O-Acyl-Endgruppen enthalten.

In der Praxis arbeitet man zweckmäßig nach den bekannten Verfahren der Reaktionsspritzgußtechnik (RIM), wie sie für Polyurethane in Piechota und Röhr, Integralschaumstoffe, Carl Hanser Verlag, 1975, Seite 34 bis 37 beschrieben sind.

Die beiden Komponenten Lactam + Katalysator und Lactam + Aktivator (wobei die Komponente B im Lactam gelöst vorliegt) werden in Vorlagekesseln getrennt auf eine Temperatur oberhalb des Schmelzpunktes, vorzugsweise 80 bis 140°C temperiert und mittels beheizten Pumpen durch beheizte Rohre zu einem ebenfalls beheizten Mischkopf gefördert.

Zum Füllen der Form wird der Räumkolben des Mischkopfes zurückgezogen, die beiden genau dosierten Komponenten treten gegebenenfalls zusammen mit der vorgesehenen Gasmenge in die geöffnete Mischkammer ein, werden dort innig gemischt, wobei die gegebenenfalls vorhandenen Gaszellen einen

**0177010**

mittleren Durchmesser von weniger als 0,2 mm aufweisen, und anschließend in die Form eingefüllt, die zweckmäßig auf eine Temperatur von 120 bis 180°C, vorzugsweise 125 bis 160°C aufgeheizt wird. Das Formteil kann bereits nach 1 bis 2 Minuten aus der Form entnommen werden. Das Polycaprolactam ist im allgemeinen hochmolekular mit einem K-Wert von mehr als 100, vielfach von 110 bis 160. Der Gehalt an Monomeren und Oligomeren liegt meist unter 3 %.

Die in den Beispielen genannten Teile beziehen sich auf das Gewicht.

<u>Beispiel 1</u>

Eine Mischung I aus
40 Teile einer 12,5%igen Lösung eines Polyamids, bestehend aus 50 Teilen Caprolactam und 50 Teilen Adipinsäure/Hexamethylendiamin-Salz, K-Wert 73,5, in Caprolactam
9 Teile einer 17,5%igen Lösung von Natriumlactamat in Caprolactam
1 Teil Polyether bestehend aus Allylalkohol/Propylenoxid (PO)/Ethylenoxid (EO), Molekulargewicht 6000 und

eine Mischung II aus
41,5 Teile einer 12,2%igen Lösung eines Copolyamids bestehend aus 50 Teilen Caprolactam und 50 Teilen Adipinsäure/Hexamethylendiamin-Salz, K-Wert 73,5, in Caprolactam
8,5 Teile einer Lösung aus 83,5% Caprolactam und 16,5 % Hexamethylendiisocyanat
1 Teil Polyether bestehend aus Allylalkohol/PO/EO, Molekulargewicht 6000,

werden unter einem Vordruck von 5 bar mit Stickstoff beladen, bei einer Temperatur von 125°C der Mischkammer zugeführt und unmittelbar anschließend in eine geschlossene Plattenform eingefüllt. Die Formtemperatur beträgt 149°C. Nach 1,5 Minuten wird entformt.

Es wurde ein Platte mit glatter, schrumpffreier Oberfläche erhalten, die folgende mechanischen Eigenschaften aufweist:

Dichte:                              $1{,}078 \ g/cm^3$

Porenvolumen:                        5 %

Mittlerer Zelldurchmesser:           0,05 mm

Streckspannung $[N/mm^2]$ DIN 53 504    75

Zugfestigkeit  $[N/mm^2]$ DIN 53 504    70

Reißdehnung:   [%] DIN 53 504         24

Shore-D-Härte: DIN 53 505            80

Grenzbiegespannung [DIN 53 452] $N/mm^2$: 68

Lochschlagzähigkeit  + 23°C          $16 \ kJ/m^2$

[DIN 53 753]         - 40°C          $5 \ kJ/m^2$

Biege-E-Modul [DIN 53 457] $N/mm^2$:  2900

Wärmeformbeständigkeit ISO $75_B$ [°C] 204


Beispiel 2


Wie in Beispiel 1 werden Platten hergestellt.


Ansatz aus I:

40 Teile einer 12,5%igen Lösung eines Polyamids bestehend aus 40 Teilen Caprolactam und 60 Teilen Adipinsäure/Hexamethylendiamin-Salz, K-Wert 74,6, in Caprolactam

9 Teile einer 17,5%igen Lösung von Natriumlactamat in Caprolactam

1 Teil Polyether bestehend aus Allylalkohol/PO/EO, Molekulargewicht 6000,


und Ansatz aus II:

41,5 Teile einer 12,2%igen Lösung eines Polyamids bestehend aus 40 Teilen Caprolactam und 60 Teilen Adipinsäure/Hexamethylendiamin-Salz, K-Wert 74,6, in Caprolactam

8,5 Teile einer 17,5%igen Lösung von Hexamethylendiisocyanat in Caprolactam

1 Teil Polyether bestehend aus Allylalkohol/PO/EO, Molekulargewicht 6000.


Mischtemperatur:    125°C

Formtemperatur:     149°C

Entformzeit:        1,5 Minuten

Vordruck:           5 bar Stickstoff


Es wurde eine Platte mit glatter Oberfläche erhalten.

Mechanische Eigenschaften

| | |
|---|---|
| Dichte: | 1,069 g/cm$^3$ |
| Porenvolumen: | 6 % |
| Mittlerer Zelldurchmesser: | 0,04 mm |
| Streckspannung [N/mm$^2$] DIN 53 504 | 81 |
| Zugfestigkeit [N/mm$^2$] DIN 53 504 | 65 |
| Reißdehnung: [%] DIN 53 504 | 5 |
| Shore-D-Härte: DIN 53 505 | 80 |
| Grenzbiegespannung [DIN 53 452] N/mm$^2$: | 65 |
| Lochschlagzähigkeit + 23°C | 15 kJ/m$^2$ |
| [DIN 53 753] − 40°C | 6 kJ/m$^2$ |
| Biege-E-Modul [DIN 53 457] N/mm$^2$: | 2880 |
| Wärmeformbeständigkeit ISO 75$_B$ [°C] | 203 |

Beispiel 3

Wie in Beispiel 1 werden Platten hergestellt.

Ansatz aus I:
40 Teile einer 12,5%igen Lösung eines Polyamids bestehend aus 33 1/3 Teilen Caprolactam, 33 1/3 Teilen Adipinsäure/Hexamethylendiamin-Salz, 33 1/3 Teile Adipinsäure − 4,4'-Diaminodicyclohexylmethan-Salz, K-Wert: 71,6
9 Teile einer 17,5%igen Lösung von Natriumlactamat in Caprolactam
1 Teil Polyether bestehend aus Allylalkohol/PO/EO, Molekulargewicht 6000,

und Ansatz aus II:
41 Teile einer 12,2%igen Lösung in Caprolactam eines Polyamids bestehend aus 33 1/3 Teilen Adipinsäure/Hexamethylendiamin-Salz, 33 1/3 Adipinsäure/4,4'-Diaminodicyclohexylmethan-Salz, 33 1/3 Teilen Caprolactam, K-Wert: 71,6

8,5 Teile einer 17,5%igen Lösung von Hexamethylendiisocyanat in Caprolactam

0,5 Teile Polyether, bestehend aus Allylalkohol/PO/EO, Molekulargewicht 6000,

| | |
|---|---|
| Mischtemperatur: | 125°C |
| Formtemperatur: | 143°C |
| Entformzeit: | 2 Minuten |
| Vordruck: | 5 bar Stickstoff |

**0177010**

Es wurde eine Platte mit glatter Oberfläche erhalten.

| | |
|---|---|
| Dichte: | $1{,}078$ g/cm$^3$ |
| Porenvolumen: | 5 % |
| Mittlerer Zelldurchmesser: | $0{,}05$ mm |
| Streckspannung [N/mm$^2$] DIN 53 504 | 80 |
| Zugfestigkeit [N/mm$^2$] DIN 53 504 | 65 |
| Reißdehnung: [%] DIN 53 504 | 6 |
| Shore-D-Härte: DIN 53 505 | 79 |

Grenzbiegespannung [DIN 53 452] N/mm$^2$: 68

| | |
|---|---|
| Lochschlagzähigkeit + 23°C | 14 kJ/m$^2$ |
| [DIN 53 753] − 40°C | 7 kJ/m$^2$ |

Biege-E-Modul [DIN 53 457] N/mm$^2$: 2950

Wärmeformbeständigkeit ISO 75$_B$ [°C] 201

Beispiel 4

Wie in Beispiel 1 werden Platten hergestellt.

Ansatz aus I:

40 Teile einer 12,5%igen Lösung eines Polyamids aus Terephthalsäure und 2,2,4-Trimethylhexamethylendiamin, K-Wert: 68,5,

in Caprolactam

9 Teile einer 17,5%igen Lösung von Natriumlactamat in Caprolactam

0,5 Teile Polyether bestehend aus PO (16,3%)/EO (83,7%) mit n-Propanol als Starter (Molekulargewicht 4000)

1 Teil Talkum

und Ansatz aus II:

39,9 Teile einer 12,5%igen Lösung eines Polyamids bestehend aus Terephthalsäure und 2,4,4-Trimethylhexamethylendiamin, K-Wert; 68,5

in Caprolactam

8,5 Teile einer 17,5%igen Lösung von Hexamethylendiisocyanat in Caprolactam

1 Teil Talkum

0,5 Teile Polyether bestehend aus PO (16,3%)/EO (83,7%) mit n-Propanol als Starter (Molekulargewicht 4000)

0,1 Teil Cu(I)J/KJ (Molverhältnis 1:3)

0,002 Teil Mangan-II-hypophosphit

Mischtemperatur: 120°C

Formtemperatur: 149°C

Entfernzeit: 2 Minuten

Vordruck: 5 bar Stickstoff

Es wurde eine Platte mit glatter Oberfläche erhalten.

Mechanische Eigenschaften:

Dichte: 1,066 g/cm$^3$

Porenvolumen: 6,5 %

Mittlerer Zelldurchmesser: 0,03 mm

Streckspannung [N/mm$^2$] DIN 53 504   75

Zugfestigkeit [N/mm$^2$] DIN 53 504   67

Reißdehnung: [%] DIN 53 504   6

Shore-D-Härte: DIN 53 505   79

Grenzbiegespannung [DIN 53 452] N/mm$^2$: 68

Lochschlagzähigkeit + 23°C   22,5 kJ/m$^2$

[DIN 53 753]   - 40°C   6,2 kJ/m$^2$

Biege-E-Modul [DIN 53 457] N/mm$^2$: 3030

Wärmeformbeständigkeit ISO 75$_B$ [°C] 193

Beispiel 5

Wie in Beispiel 1 wurden Platten hergestellt.

Ansatz aus I:

40 Teile einer 12,5%igen Lösung eines Polyamids hergestellt aus

40 Teilen Adipinsäure/Hexamethylendiamin-Salz,

60 Teilen Isophthalsäure/3,3'-Dimethyl-4,4'-diaminodicyclohexylmethan-Sal z, K-Wert: 60, in Caprolactam, 9 Teile einer 17,5%igen Lösung von Natriumlactamat in Caprolactam

0,5 Teile Polyether aus PO (16,3%)/EO (83,7%) mit n-Propanol als Starter (Molekulargewicht 4000)

1 Teil Talkum

und Ansatz aus II:

40 Teile einer 12,5%igen Lösung eines Polyamids aus

40 Teilen Adipinsäure/Hexamethylendiamin-Salz,

60 Teilen Isophthalsäure/3,3'-Dimethyl-4,4'-diamino-dicyclohexylmethan-Sa lz, K-Wert: 60, in Caprolactam

8,5 Teile einer 17,5%igen Lösung von Hexamethylendiisocyanat in Caprolactam

1 Teil Talkum

0,5 Teile Polyether aus PO(16,3%)/EO(83,7%) mit n-Propanol als Starter (Molekulargewicht 4000)

| | |
|---|---|
| Mischtemperatur: | 120°C |
| Formtemperatur: | 147°C |
| Entfernzeit: | 2 Minuten |
| Vordruck: | 5 bar Stickstoff |

Es wurde eine Platte mit glatter Oberfläche erhalten.

| | |
|---|---|
| Dichte: | $1,07 \ g/cm^3$ |
| Porenvolumen: | 8 % |
| Mittlerer Zelldurchmesser: | 0,02 mm |
| Streckspannung $[N/mm^2]$ DIN 53 504 | 68 |
| Zugfestigkeit $[N/mm^2]$ DIN 53 504 | 70 |
| Reißdehnung: $[\%]$ DIN 53 504 | 8 |
| Shore-D-Härte: DIN 53 505 | 80 |
| Grenzbiegespannung [DIN 53 452] $N/mm^2$: | 68 |
| Lochschlagzähigkeit + 23°C | $23 \ kJ/m^2$ |
| [DIN 53 753] − 40°C | $8 \ kJ/m^2$ |
| Biege-E-Modul [DIN 53 457] $N/mm^2$: | 3000 |
| Wärmeformbeständigkeit ISO $75_B$ [°C] | 195 |

Beispiel 6

Herstellung eines glasmattenverstärkten Formteils. Vor dem Formfüllvorgang entsprechend Beispiel 1 wurden in die Form 3 Glasmatten mit einem Flächengewicht von $450 \ g/m^2$ eingelegt.

0177010

Ansatz aus I:

39,5 Teile einer 9,5%igen Lösung eines Polyamids aus

33 1/3 Teilen Caprolactam,

33 1/3 Teilen Adipinsäure/Hexamethylendiamin-Salz,

33 1/3 Adipinsäure/4,4'-Diaminodicyclohexylmethan-Salz, K-Wert: 71,6,

9 Teile einer 17,5%igen Lösung von Natriumlactamat in Caprolactam

1 Teil Talkum

0,5 Teile Polyether aus PO(16,3%)/EO(83,7%) mit n-Propanol als Starter (Molekulargewicht 4000)

und Ansatz aus II:

39,9 Teile einer 9,4%igen Lösung eines Polyamids aus

33 1/3 Teilen Caprolactam,

33 1/3 Teilen Adipinsäure/Hexamethylendiamin-Salz,

33 1/3 Adipinsäure/4,4'-Diaminodicyclohexylmethan-Salz,

K-Wert: 71,6

8,5 Teile einer 17,5%igen Lösung von Hexamethylendiisocyanat in Caprolactam

1 Teil Talkum

0,1 Teile Cu(I)J/kJ (Molverhältnis 1:3)

Mischtemperatur:    120°C

Formtemperatur:     149°C

Entfernzeit:        1,5 Minuten

Vordruck:           5 bar Stickstoff

Es wurde eine Platte mit schrumpffreie Oberfläche erhalten mit einem Glasgehalt von 28,5 %.

Mechanische Eigenschaften:

Dichte:                                          $1,31 \ g/cm^3$

Porenvolumen:                                    0 %

Mittlerer Zelldurchmesser:                       0,02 mm

Streckspannung $[N/mm^2]$ DIN 53 504            84

Zugfestigkeit $[N/mm^2]$ DIN 53 504             150

Reißdehnung:    [%] DIN 53 504                   2,5

Shore-D-Härte: DIN 53 505                        84

Grenzbiegespannung [DIN 53 452] $N/mm^2$: 68

Lochschlagzähigkeit  + 23°C                      $24 \ kJ/m^2$

[DIN 53 753]         - 40°C                      $25 \ kJ/m^2$

Biege-E-Modul [DIN 53 457] $N/mm^2$:  7600

Wärmeformbeständigkeit ISO $75_B$ [°C] 220

Beispiel 7

Man arbeitet wie in Beispiel 1 und einem Ansatz aus I:

42 Teile einer 10%igen Lösung in Caprolactam eines Polyamids bestehend aus

60 Teilen Adipinsäure/Hexamethylendiamin-Salz,

40 Teilen Caprolactam, K-Wert: 74,6,

8 Teile einer 17,5%igen Lösung von Natriumlactamat in Caprolactam

1 Teil Polyether bestehend aus Allylalkohol/PO/EO, Molekulargewicht 6000,

und Ansatz aus II:

41,5 Teile einer 10%igen Lösung in Caprolactam eines Copolyamids bestehend aus

1800 Teilen Adipinsäure-Hexamethylendiamin-Salz,

129 Teilen Adipinsäure,

60 Teilen Hexamethylendiamin,

1011 Teilen Diamin auf Basis Polytetrahydrofuran (MG 1100)

K-Wert:    55

COOH [Val/kg]   7,9

$NH_2$ [Val/kg]   266

8,5 Teile einer 17,5%igen Lösung von Hexamethylendiisocyanat in Caprolactam,

1 Teil Polyether bestehend aus Allylalkohol/PO/EO, Molekulargewicht 6000.

Mischtemperatur:    125°C

Formtemperatur:     143°C

Entformzeit:        2 Minuten

Vordruck:           5 bar Stickstoff

Es wurde eine Platte mit einwandfreier Oberfläche erhalten.

Dichte:                                 1,058 g/cm$^3$

Porenvolumen:                           8 %

Mittlerer Zelldurchmesser:              0,06 mm

Streckspannung [N/mm$^2$] DIN 53 504    70

Zugfestigkeit  [N/mm$^2$] DIN 53 504    50

Reißdehnung:   [%] DIN 53 504           25

Shore-D-Härte: DIN 53 505               77

Grenzbiegespannung [DIN 53 452] N/mm$^2$: 68

Lochschlagzähigkeit  + 23°C             94 kJ/m$^2$

[DIN 53 753]         - 40°C             20 kJ/m$^2$

Biege-E-Modul [DIN 53 457] N/mm$^2$:    2600

Wärmeformbeständigkeit ISO 75$_B$ [°C] 201

### Beispiel 8

a) Es wurde eine 10%ige Lösung eines Polyamids bestehend aus 60 Gew.-Teilen Isophthalsäure/40 Gew.-Teilen Terephthalsäure und der äquivalenten Menge Hexamethylendiamin in Caprolactam hergestellt. Das Copolyamid besaß einen K-Wert von 55. Die Lösung gelierte nach Stehenlassen bei 120°C, nach 1 Stunde. Wurde die Lösung jedoch mit 5 % (bezogen auf Polyamid) bei 120°C mit N,N-Dimethylformamiddimethylacetal versetzt, 1 Stunde bei dieser Temperatur gerührt, DMF und Methanol im Vakuum entfernt, erhielt man eine lagerstabile Lösung.

b) Wie in Beispiel 1 wurden Platten hergestellt.

Ansatz aus I
40 Teile Caprolactam
10 Teile einer 17,5%igen Lösung von Natriumlactamat in Caprolactam
1 Teil Polyether, bestehend aus Allylalkohol/PO/EO, Molekulargewicht 6000,

und aus Ansatz II
40 Teile der unter a) hergestellten Copolyamid-Lösung in Caprolactam
10 Teile einer 17,5%igen Lösung von Hexamethylen-diisocyanat in Caprolactam.

Mischtemperatur:     125°C
Formtemperatur:      143°C
Entformzeit:         1 Minute
Vordruck:            3 bar Stickstoff

Es wurde eine Platte mit einwandfreier Oberfläche erhalten.

Dichte:                              1,07 $g/cm^3$
Porenvolumen:                        6 %
Mittlerer Zelldurchmesser:           0,05 mm
Streckspannung [$N/mm^2$] DIN 53 504  70
Zugfestigkeit  [$N/mm^2$] DIN 53 504  65
Reißdehnung:   [%] DIN 53 504         25
Shore-D-Härte: DIN 53 505            78
Grenzbiegespannung [DIN 53 452] $N/mm^2$: 68
Lochschlagzähigkeit  + 23°C          111 $kJ/m^2$
[DIN 53 753]         - 40°C          46 $kJ/m^2$
Biege-E-Modul [DIN 53 457] $N/mm^2$: 2900
Wärmeformbeständigkeit ISO 75$_B$ [°C] 203

Beispiel 9

Die Lagerstabilität einer 12,5gew.-%igen Lösung der in Beispiel 1, 2, 3, 4, 5 und 7 genannten Polyamide sowie die mechanischen Eigenschaften des Endprodukts und die Entformzeit, wurden wesentlich verbessert durch Umsetzung mit

a) Hexamethylendiisocyanat, desgleichen mit
b) Lactamcarbonsäuremethylester
c) Acryloylcaprolactam
d) Methacryloylcaprolactam
e) Acetanhydrid
f) N,N-Dimethylformamiddimethylacetal
g) 1-Dimethylamino-1-methoxy-acetonitril
h) durch Direktveresterung mit monofunktionellen Alkoholen
i) $\alpha$-Hydroxymethylcaprolactam

Durch die Umsetzungen gemäß a bis i werden die Endgruppen des Polyamids verkappt, d.h. die Aminogruppen werden acyliert bzw. alkyliert und die Carbonsäuregruppen werden verestert bzw. amidiert.

Die Schlagzähigkeit konnte z.T. verdoppelt und die Entformzeit um die Hälfte reduziert werden.

Beispiel 10

Die Verkappung eines Polyetheresters auf Basis Terepthalsäure/Butandiol/Polytetrahydrofuran wurde durch Umsetzung mit Dimethylformamidacetal sowie durch Veresterung mit monofunktionellen Alkoholen durchgeführt.

Es wurden Platten wie in Beispiel 1 hergestellt.

Ansatz aus
42 Teile Caprolactam
8 Teile einer 17,5%igen Lösung von Natriumlactamat in Caprolactam

und II
41,5 Teile einer 10%igen Lösung eines Polyetheresters auf Basis Terephthalsäure/Butandiol/Polytetrahydrofuran umgesetzt mit 5 Teilen Dimethylformamidacetal,
8,5 Teile einer 17,5%igen Lösung von Hexamethylendiisocyanat in Caprolactam.

Mischtemperatur:     130°C

Formtemperatur:      147°C

Entformzeit:         1,5 Minuten

Vordruck:            3 bar Stickstoff

Es wurde eine Platte mit glatter Oberfläche erhalten.

Dichte:                              1,05 g/cm$^3$

Porenvolumen:                        7 %

Mittlerer Zelldurchmesser:           0,03 mm

Zugfestigkeit  [N/mm$^2$] DIN 53 504  68

Reißdehnung:   [%] DIN 53 504         8

Shore-D-Härte: DIN 53 505            78

Grenzbiegespannung [DIN 53 452] N/mm$^2$: 65

Lochschlagzähigkeit  + 23°C          15 kJ/m$^2$

[DIN 53 753]         - 40°C          6 kJ/m$^2$

Biege-E-Modul [DIN 53 457] N/mm$^2$:  2800

Wärmeformbeständigkeit ISO 75$_B$ [°C] 198

## Beispiel 11

Eine Mischung I aus

15 Teile einer 30%igen Lösung eines Copolyamids hergestellt aus 30 Teilen
$\varepsilon$-Caprolactam, 33,24 Teilen dimerisierter Fettsäure (Pripol® 1010 der
Firma Unichema, Molekulargewicht 820, Säurezahl 191) 16,68 Teilen Adipinsäure, 20,10 Teile Hexamethylendiamin (K-Wert 69  (0,5%ig in Phenol/o-Di-
chlorbenzol) in $\varepsilon$-Caprolactam

6,33 Teile $\varepsilon$-Caprolactam, 9 Teile einer 17,5%igen Lösung von Natriumlactamat in $\varepsilon$-Caprolactam, 1,25 Teile Ruß, 0,5 Teile Polyether, aus Allylalkohol/Propylenoxid (PO)/Ethylenoxid (EO), Molekulargewicht 6000,
1,25 Teile Talkum und eine

Mischung II aus

35 Teilen einer 30%igen Lösung eines Copolyamids hergestellt aus
30 Teilen Caprolactam, 33,24 Teilen dimerisierter Fettsäure
(Pripol® 1010 der Firma Unichema, Molekulargewicht 820, Säurezahl 191),
16,68 Teilen Adipinsäure, 20,10 Teilen Hexamethylendiamin, (K-Wert 69,
NH$_2$-Gruppen 41 mäq/kg, COOH-Gruppen 55 mäq/kg, wobei die Carboxylgruppen
mit einem Gemisch aus 2,4- und 2,6-Toluylendiisocyanat umgesetzt wurden,
durch 2-stündiges Rühren bei 160°C), in $\varepsilon$-Caprolactam.

**0177010**

20,56 Teilen $\xi$-Caprolactam, 8,0 Teilen einer Lösung aus 60 %
$\xi$-Caprolactam und 40 % Hexamethylendiisocyanat, 1,25 Teile Ruß,
1,25 Teile Talkum, 0,5 Teile Polyether (wie oben), 0,1 Teile
Kupfer(I)jodid/Triphenylphosphin/Mn(II)CO$_3$ werden unter einem Vordruck
von 5 bar mit Stickstoff beladen, bei einer Temperatur von 125°C der
Mischkammer zugeführt, wobei das Mischungsverhältnis I : II  100 : 204
beträgt, und unmittelbar anschließend in eine geschlossene Plattenform
eingefüllt. Die Formtemperatur beträgt 150°C. Nach 1 Minute wird
entformt. Es wurde eine Platte mit glatter Oberfläche erhalten, die
folgende mechanischen Werte aufweist:

| | |
|---|---|
| Dichte: | 1,055 g/cm$^3$ |
| Porenvolumen: | 3 % |
| Mittlere Zelldurchmesser: | 0,05 mm |
| Zugfestigkeit [N/mm$^2$]: | 60 |
| Shore-D-Härte [DIN 53505]: | 80 |
| Schlagzähigkeit + 23°C: | 28 |
| [DIN 53453]    - 40°C: | 14 |
| Biege-E-Modul [N/mm$^2$]  - 30°C: | 3240 |
| [DIN 53457]          + 23°C: | 2430 |
| + 65°C: | 736 |

Wärmeformbeständigkeit
ISO 75$_B$ °C:                    204°C

Längenausdehnung bei Wasserlagerung
(10 Tage bei 23°C):           0,3 %

**Beispiel 12**

Es wurde wie in Beispiel 11 beschrieben verfahren.

Der Mischung II wurden zusätzlich 3 Teile einer Lösung bestehend 50 Teilen Caprolactam und 50 Teilen trimerisiertes Hexamethylendiisocyanat mit einer mittleren Funktionalität von 3,6 (Zahlenmittel) zugesetzt. Es wurden Teile mit ausgezeichneter Oberfläche erhalten.

Beispiel 13

Es wurde wie in Beispiel 11 beschrieben verfahren.

Der Mischung I wurden 0,75 Teile Calciumstearat zugesetzt. Gleichzeitig wurde der Polyether in Komponente I und II weggelassen. Der Mischung II wurden wie in Beispiel 12 beschrieben, zusätzlich 3 Teile einer Lösung bestehend aus 50 Teilen Caprolactam und 50 Teilen trimerisiertes Hexamethylendiisocyanat mit einer Funktionalität von 3,6 (Zahlenmittel) zugesetzt. Es wurden Teile mit ausgezeichneter Oberfläche erhalten.

Beispiel 14

Es wurde wie in Beispiel 11 verfahren. Dem in Beispiel 11 eingesetzten Copolyamid wurde jedoch vor der Polykondensation 1 Teil Trimesinsäure/Hexamethylendiamin-Salz zugesetzt. Das Copolyamid besaß einen K-Wert (0,5%ig in Phenol/O-Dichlorbenzol 1:1) von 62. Der Komponente I und II wurden je 0,5 Teile eines Entschäumers (Byk[R] A 500 der Fa. Mallinckrodt, D-4230 Wesel 1, Deutschland) zugesetzt. Wie in den Beispielen 12 und 13 wurde der Komponente II zusätzlich 3 Teile einer Lösung aus 50 Teilen Caprolactam und 50 Teilen trimersiertes Hexamethylendiisocyanat mit einer Funktionalität von 3,6 (Zahlenmittel) zugesetzt. Es wurden Teile mit ausgezeichneter Oberfläche erhalten.

Beispiel 15

Es wurde wie in Beispiel 11 verfahren. Dem in Beispiel 11 eingesetzten Copolyamid wurden jedoch vor der Polykondensation 0,2 Teile einer Lösung aus 50 Teilen Caprolactam und 50 Teilen trimerisiertes Hexamethylendiisocyanat mit einer Funktionalität von 3,6 (Zahlenmittel) zugesetzt. Das Copolyamid besaß einen K-Wert (0,5 %ig in Phenol/o-Dichlorbenzol 1:1) von 69. Der Mischung I wurden 0,5 Teile Kaliumstearat zugesetzt. Gleichzeitig wurde der Polyether in Komponente I und II weggelassen. Der Mischung II wurden wie in Beispiel 12 beschrieben, zusätzlich 3 Teile einer Lösung bestehend aus 50 Teilen Caprolactam und 50 Teilen trimerisiertes Hexamethylendiisocyanat mit einer Funktionalität von 3,6 (Zahlenmittel) zugesetzt. Es wurden Teile mit ausgezeichneter Oberfläche erhalten.

**0177010**

Beispiel 16

Gegenüber Beispiel 11 wurden die Verfahrensbedingungen geändert. Der Vordruck bei Komponente II betrug 4 bar Stickstoff. Der Vordruck bei Komponente I betrug 1,5 bar. Die Zusammensetzung der Komponenten entsprach der in Beispiel 13 genannten, außer daß der Komponente II zusätzlich 0,2 Teile Hexamethyldisilan zugesetzt wurden. Es wurden Teile mit ausgezeichneter Oberfläche erhalten.

0177010

Patentansprüche

1. Gegebenenfalls zellförmige Polyamidformteile, enthaltend

A) 70 - 99 Gew.-Teile Polycaprolactam und

B) 1 - 30 Gew.-Teile eines Polykondensats, das amorph ist oder weniger als 30 % kristalline Anteile aufweist, mit einer Löslichkeit in Caprolactam bei 120°C von mindestens 5 Gew.-%, sowie gegebenenfalls

C) bis zu 100 Gew.-Teile Glasfasern und/oder andere Füllstoffe und/oder flächige Verstärkungsmaterialien und/oder

D) übliche Hilfsstoffe in wirksamen Mengen.

2. Polyamidformteile nach Anspruch 1, dadurch gekennzeichnet, daß sie 3 - 100 Vol.-% bezogen auf (A) und (B) gasgefüllte Zellen mit einem mittleren Durchmesser von weniger als 0,2 mm aufweisen.

3. Polyamidformteile gemäß Anspruch 1, dadurch gekennzeichnet, daß sie durch aktivierte alkalische Lactam-Polymerisation hergestellt wurden.

4. Polyamidformteile gemäß Anspruch 1, dadurch gekennzeichnet, daß sie als Polykondensat ein Polyamid mit einem K-Wert (0,5%ig in Phenol/o-Dichlorbenzol 1:1) von 30 bis 75 enthalten.

5. Polyamidformteile gemäß Anspruch 1, dadurch gekennzeichnet, daß sie als Polykondensat ein aliphatisches Polyamid mit einem Schmelzpunkt unter 200°C und/oder ein aromatisch/aliphatisches Polyamid mit einem Glaspunkt zwischen 100 und 170°C enthalten.

6. Polyamidformteile gemäß Anspruch 1, dadurch gekennzeichnet, daß sie als Polykondensat ein Polyamid enthalten, aufgebaut aus

a) 20 - 60 Gew.-% eines cyclischen Lactams mit 6 - 12 Kohlenstoffatomen und/oder $\alpha$-Aminocarbonsäuren mit 6 - 20 Kohlenstoffatomen

b) 40 - 80 Gew.-% Salzen von Dicarbonsäuren mit 6 bis 14 Kohlenstoffatomen und/oder dimerisierten Fettsäuren mit etwa 36 Kohlenstoffatomen und aliphatischen und/oder cycloaliphatischen und/oder araliphatischen Diaminen.

**0177010**

7. Polyamidformteile gemäß Anspruch 1, dadurch gekennzeichnet, daß sie als Polykondensat ein Polyamid enthalten, aufgebaut aus mindestens einer aliphatischen Dicarbonsäure mit 4 - 12 Kohlenstoffatomen und/oder aromatischen Dicarbonsäure mit 8 bis 12 Kohlenstoffatomen und mindestens einem aliphatischen und/oder cycloaliphatischen und/oder araliphatischen Diamin mit 4 bis 20 Kohlenstoffatomen und/oder Polyetherdiamin mit Molekulargewichten von 500 bis 5000.

8. Polyamidformteile gemäß Anspruch 1, dadurch gekennzeichnet, daß sie als Polykondensat einen Copolyester aus mindestens einer aromatischen Dicarbonsäure mit 8 bis 20 Kohlenstoffatomen und einem aliphatischen Diol mit 2 bis 12 Kohlenstoffatomen und/oder einem aliphatischen Polyetherdiol mit einem Molekulargewicht von 200 bis 5000 enthalten.

9. Polyamidformteile gemäß Anspruch 1, dadurch gekennzeichnet, daß sie als Polykondensat einen Copolyester aus Terephthalsäure und Butandiol-(1,4) und Polytetrahydrofuran enthalten.

10. Polyamidformteile gemäß Anspruch 1, dadurch gekennzeichnet, daß die Carboxylendgruppen der Polykondensate verestert oder amidiert sind.

11. Polyamidformteile gemäß Anspruch 1, dadurch gekennzeichnet, daß die Aminoendgruppen der Polykondensate acyliert oder alkyliert sind.

12. Verfahren zur Herstellung der Polyamidformteile gemäß Anspruch 1, dadurch gekennzeichnet, daß man eine Lösung des Polykondensats in flüssigem Caprolactam, gegebenenfalls in Gegenwart von Füllstoffen und/oder üblichen Hilfsstoffen, in an sich bekannter Weise in einer Form aktiviert alkalisch polymerisiert.

13. Verfahren zur Herstellung der Polyamidformteile gemäß Anspruch 2, dadurch gekennzeichnet, daß man ein inniges Gemisch aus einer Lösung des Polykondensats in flüssigem Caprolactam und einem inerten Gas, gegebenenfalls in Gegenwart von Füllstoffen und/oder üblichen Hilfsstoffen, in an sich bekannter Weise in einer Form aktiviert alkalisch polymerisiert.

14. Verfahren nach Anspruch 13, dadurch gekennzeichnet, daß man die Polymerisation in Gegenwart von 0,01 bis 5 Gew.-%, bezogen auf (A), eines Emulgators durchführt.

15. Verfahren nach Anspruch 13, dadurch gekennzeichnet, daß man vor der Polymerisation das Inertgas unter Druck in (A) oder der Lösung aus (B) in (A) löst.